# EUROPÄISCHE PATENTSCHRIFT

(11) **EP 2 873 819 B1**
(45) Veröffentlichungstag und Bekanntmachung des Hinweises auf die Patenterteilung: **05.09.2018**
(21) Anmeldenummer: 14002465.4
(22) Anmeldetag: 16.07.2014
(51) Int. Cl.: F01N 3/08

(54) **Abgasnachbehandlungsvorrichtung für eine Brennkraftmaschine und Verfahren zum Aufheizen einer Abgasnachbehandlungsvorrichtung**
Exhaust gas after-treatment apparatus and method of heating up the apparatus
Système de traitement des gaz d'échappement et procédé de montée en température de ce système

(30) Priorität: 13.11.2013 DE 102013018920
(43) Veröffentlichungstag der Anmeldung: 20.05.2015
(60) Teilanmeldung: 18175904.4
(73) Patentinhaber: MAN Truck & Bus AG, 80995 München (DE)
(72) Erfinder: Rothe, Dieter, 90403 Nürnberg (DE); Lutz, Florian, 91522 Ansbach (DE)
(74) Vertreter: Liebl, Thomas

(56) Entgegenhaltungen:
- EP-A1- 2 130 578
- EP-A2- 1 186 764
- WO-A2-2009/053798
- GB-A- 2 340 054
- US-A1- 2010 043 410
- US-A1- 2010 115 919

## Beschreibung

Die Erfindung betrifft eine Abgasnachbehandlungsvorrichtung für eine Brennkraftmaschine nach dem Oberbegriff des Patentanspruches 1 und ein Verfahren zum Aufheizen einer Abgasnachbehandlungsvorrichtung nach dem Oberbegriff des Patentanspruches 12.

Bei modernen Abgasnachbehandlungssystemen ist es üblich, mehrere Arten von Abgasnachbehandlungselementen, beispielsweise Katalysatoren oder Partikelfilter, in einen Abgasstrang zu integrieren und mittels diesen Abgasnachbehandlungselementen für eine gezielte Reduzierung einzelner Schadstoffarten zu sorgen. Einige dieser Abgasnachbehandlungselemente erreichen jedoch ihre volle Leistungsfähigkeit bzw. ihre optimale Arbeits-Temperatur erst bei warmgelaufener Brennkraftmaschine. Aus diesem Grund werden umfangreiche Maßnahmen getroffen, die in der Kaltstartphase einer Brennkraftmaschine ein rasches Aufheizen dieser Abgasnachbehandlungselemente sicherstellen.

Aus der DE 198 00 654 A1 ist es beispielsweise bekannt, in einem Abgasstrang für eine Brennkraftmaschine eine erste Wasserfalle, einen elektrisch beheizbaren Wabenkörper, einen Wabenkörper mit katalytisch aktiver Beschichtung und eine zweite Wasserfalle in Abgas-Strömungsrichtung hintereinander anzuordnen. Der elektrisch beheizbare Wabenkörper und der Wabenkörper mit katalytisch aktiver Beschichtung können hier bevorzugt eine Baueinheit ausbilden, wodurch der Wabenkörper mit katalytisch aktiver Beschichtung mittels des elektrisch beheizbaren Wabenkörpers in der Kaltstartphase des Verbrennungsmotors schneller erwärmt werden kann. Auf diese Weise wird die Reduzierung der Schadstoffe in dem Abgas der Brennkraftmaschine verbessert. Mittels der beiden Wasserfallen ist zudem sichergestellt, dass die beiden Wabenkörper in einem trockenen Zustand sind und sich somit besonders schnell erwärmen.

Aus der WO 2009/053798 A2 geht eine Abgasnachbehandlungsvorrichtung für eine Brennkraftmaschine hervor, bei der ein Abgasstrang ein Abgasnachbehandlungselement aufweist, das durch einen Feuchtigkeits-Adsorber bzw. durch einen Wasser-Adsorber gebildet ist. Dabei ist hier auch ein stromauf des Feuchtigkeits-Adsorbers angeordnetes Schaltventil vorgesehen, mittels dem die Abgaszufuhr zu dem Feuchtigkeits-Adsorber gesperrt und freigegeben werden kann.

Aufgabe der Erfindung ist es, eine Abgasnachbehandlungsvorrichtung für eine Brennkraftmaschine, insbesondere zur Verwendung in einem Kraftfahrzeug, und ein Verfahren zum Aufheizen einer Abgasnachbehandlungsvorrichtung bereitzustellen, mit der bzw. mit denen die Reduzierung der Schadstoffemissionen, insbesondere in der Kaltstartphase der Brennkraftmaschine, auf einfache und funktionssichere Weise mit hoher Effektivität erreichbar ist.

Diese Aufgabe wird durch die Merkmale der unabhängigen Ansprüche gelöst. Bevorzugte Weiterbildungen sind in den Unteransprüchen offenbart.

Die Erfindung betrifft eine Abgasnachbehandlungsvorrichtung für eine Brennkraftmaschine, insbesondere zur Verwendung in einem Kraftfahrzeug, mit einem Abgasstrang mit wenigstens einem Abgasrohr und wenigstens einem Abgasnachbehandlungselement. Erfindungsgemäß weist die Abgasrohrinnenwand und/oder das wenigstens eine Abgasnachbehandlungselement zur Ausbildung wenigstens eines abgasstrangseitigen Sorptionselements ein Dampf sorbierendes Material auf.

Die Ad- und/oder Absorption des beispielsweise aus dem Abgas der Brennkraftmaschine stammenden Dampfes, insbesondere Wasserdampf, mittels des Dampf sorbierenden Materials führt zu einer Kondensation des Dampfes und somit zu einer Freisetzung von Wärmeenergie. Diese Wärmeenergie bewirkt ein Aufheizen des durch die Abgasrohrinnenwand und/oder das wenigstens eine Abgasnachbehandlungselement gebildeten Sorptionselements, so dass bei einem Starten der Brennkraftmaschine, insbesondere bei einem Kaltstart der Brennkraftmaschine, der gesamte Abgasstrang schneller erwärmt wird und das wenigstens eine Abgasnachbehandlungselement schneller seine optimale Arbeits-Temperatur erreichen kann. Dadurch ist die Erwärmung des wenigstens einen Abgasnachbehandlungselements deutlich vereinfacht, da lediglich das Dampf sorbierende Material vorgesehen sein muss. So kann beispielsweise auf elektrische Leitungen bzw. Anschlüsse für die Energieversorgung eines elektrischen Heizelements verzichtet werden. Da zudem die Abgasrohrinnenwand und/oder das wenigstens eine Abgasnachbehandlungselement das wenigstens eine abgasstrangseitige Sorptionselement ausbilden muss auch kein zusätzliches Heizelement in dem Abgasstrang vorgesehen werden. Auf diese Weise wird der Strömungswiderstand bzw. der Abgasgegendruck in den Abgasstrang nicht merklich erhöht und das wenigstens eine Abgasnachbehandlungselement unter Berücksichtigung des Kraftstoffverbrauchs der Brennkraftmaschine besonders effektiv aufgeheizt.

In einer konkreten Ausführung kann die Abgasrohrinnenwand und/oder das wenigstens eine Abgasnachbehandlungselement wenigstens bereichsweise mit dem Dampf sorbierenden Material beschichtet sein. Dadurch kann das wenigstens eine Sorptionselement besonders einfach ausgebildet werden. Alternativ und/oder zusätzlich kann das wenigstens eine Abgasnachbehandlungselement wenigstens bereichsweise aus dem Dampf sorbierenden Material hergestellt sein. Dadurch kann die Effektivität des wenigstens einen Sorptionselements weiter verbessert werden. Ebenso wäre es auch denkbar, die Abgasrohrinnenwand wenigstens bereichsweise aus dem sorbierenden Material herzustellen.

In einer weiteren konkreten Ausführung kann das wenigstens eine Abgasnachbehandlungselement durch wenigstens einen Katalysator und/oder durch wenigstens einen Partikelfilter ausgebildet sein. Mit dem Dampf sorbierenden Material kann dieser wenigstens eine Katalysator und/oder dieser wenigstens eine Partikelfilter besonders einfach aufgeheizt werden.

In einer bevorzugten Ausführung kann der Gehalt, insbesondere der Massegehalt, des Dampf sorbierenden Materials des wenigstens einen, insbesondere in einem Einlassbereich des Abgasstranges angeordneten, Sorptionselements in Abgas-Strömungsrichtung abnehmen. Auf diese Weise kann mit einer definierten Menge an Dampf sorbierendem Material in dem wenigstens einen Sorptionselement mehr Dampf, insbesondere Wasserdampf, aus dem Abgasstrom der Brennkraftmaschine sorbiert werden. Bevorzugt kann der Gehalt des Dampf sorbierenden Materials des wenigstens einen Sorptionselements in Abgas-Strömungsrichtung degressiv abnehmen.

Alternativ und/oder zusätzlich kann der Gehalt, insbesondere der Massegehalt, des Dampf sorbierenden Materials eines in einen Auslassbereich des Abgasstrangs angeordneten Sorptionselements in Abgas-Strömungsrichtung zunehmen. Auf diese Weise wird sichergestellt, dass bei einem Stillstand der Brennkraftmaschine kein oder nur sehr wenig Dampf, insbesondere Wasserdampf, durch Luftzufuhr von außen in den Abgasstrang gelangen kann. Bevorzugt kann dieser Gehalt des Dampf sorbierenden Materials in Abgas-Strömungsrichtung progressiv zunehmen, um die Dampfaufnahme aus der Luft effektiv zu erhöhen.

In einer weiteren Ausführung kann der Gehalt, insbesondere der Massegehalt, des Dampf sorbierenden Materials in dem Abgasstrang und damit über mehrere in Abgas-Strömungsrichtung hintereinanderliegende Sorptionselemente gesehen, insbesondere in einem Einlassbereich des Abgasstrangs, in Abgas-Strömungsrichtung abnehmen. Hierdurch wird eine große Menge an beispielsweise Wasserdampf motornah sorbiert und kann somit das motornächste Abgasnachbehandlungselement sehr schnell auf die gewünschte Temperatur aufgeheizt werden. Durch die Entfernung einer großen Wasserdampfmenge gleich zu Beginn braucht dann bei den stromab liegenden Abgasnachbehandlungselementen gegebenenfalls nur noch eine geringere Sorptionsmaterialmenge vorgesehen sein. Bevorzugt kann der Gehalt des Dampf sorbierenden Materials in dem Abgasstrang in Abgas-Strömungsrichtung hier beispielsweise degressiv abnehmen.

Alternativ und/oder zusätzlich kann der Gehalt, insbesondere der Massegehalt, des Dampf sorbierenden Materials in einem Auslassbereich des Abgasstrangs in Abgas-Strömungsrichtung zunehmen, so dass bei einem Stillstand der Brennkraftmaschine kein oder nur sehr wenig Luftfeuchtigkeit durch Luftzufuhr von außen in den Abgasstrang gelangen kann. Bevorzugt kann dieser Gehalt des Dampf sorbierenden Materials in Abgas-Strömungsrichtung progressiv zunehmen.

In einer weiteren alternativen Ausführungsform kann der Gehalt, insbesondere der Massegehalt, des Dampf sorbierenden Materials in einem zwischen einem Einlass- und einem Auslassbereich des Abgasstrangs angeordneten Abgasstrang-Zwischenbereich größer sein als in einem stromauf und/oder stromab davon liegenden Abgasstrang-Bereich. Bevorzugt wird dieser Abgasstrang-Zwischenbereich durch ein Abgasnachbehandlungselement gebildet, das einen größeren Gehalt an Sorptionsmaterial aufweist, als wenigstens ein stromauf und/oder wenigstens ein stromab liegendes Abgasnachbehandlungselement. Dies kann beispielsweise für Anwendungsfälle sinnvoll sein, bei denen ein besonders temperaturkritischer Bereich nicht am Anfang oder Ende des Abgasstrangs liegt.

In einer bevorzugten Ausführungsform kann das wenigstens eine Sorptionselement in einer von einem Hauptabgasstrom durchströmten Hauptleitung des Abgasstrangs angeordnet und/oder ausgebildet sein. Dadurch kann ein besonders großer Teil des Dampfs aus dem Abgasstrom mittels des wenigstens einen Sorptionselements sorbiert werden.

Konkret kann das sorbierende Material ein Zeolith und/oder Silikagel und/oder Alumophosphat und/oder Silicoalumophosphat und/oder Metallhydrid sein. Diese ermöglichen eine besonders effektive Sorption des Dampfs. Bevorzugt kann der Zeolith ein Typ A, X oder Y sein. Weiter bevorzugt sind die verwendeten Zeolithe nicht SCR-aktiv. Insbesondere sind die verwendeten Zeolithe als nicht- metallausgetauschte Zeolithe ausgebildet, beispielsweise als Eisen- oder als Kupfer-Zeolithe.

Weiter erfindungsgemäß ist eine Sperrvorrichtung vorgesehen, mittels der eine Abgas- und/oder Luftzufuhr zu einem das wenigstens eine Sorptionselement aufnehmenden und/oder ausbildenden Sorptionsbereich in Abhängigkeit von definierten Brennkraftmaschinen-Betriebsbedingungen gesperrt und freigegeben werden an. Mittels der Sperrvorrichtung kann eine Abgas- und/oder Luftzufuhr bzw. des darin enthaltenen Dampfes zu dem wenigstens einen Sorptionselement, vorzugsweise bei einem Stillstand der Brennkraftmaschine, zuverlässig verhindert werden.

Erfindungsgemäß weist die Sperrvorrichtung zum Sperren oder Freigeben der Luftzufuhr wenigstens ein stromab des Sorptionsbereichs angeordnetes Sperrelement auf. Dadurch kann die Luftzufuhr auf einfache Weise gesperrt und freigegeben werden. Zusätzlich kann die Sperrvorrichtung zum Sperren oder Freigeben der Abgaszufuhr auch wenigstens ein stromauf des Sorptionsbereichs angeordnetes Sperrelement aufweisen. Auf diese Weise kann wiederum die Abgaszufuhr zu dem Sorptionsbereich auf einfache Weise gesperrt und freigegeben werden.

Konkret kann das wenigstens eine stromauf angeordnete Sperrelement als Sperrventil ausgebildet sein, mittels dem ein Abgasstrom durch ein den Einlass des Abgasstrangs bildendes Einlassrohr gesperrt oder freigegeben werden kann. Auf diese Weise ist das Sperrelement besonders einfach ausgebildet. Erfindungsgemäß ist das wenigstens eine stromab angeordnete Sperrelement als Sperrventil ausgebildet sein, mittels dem ein Luftstrom durch ein den Auslass des Abgasstrangs bildendes Auslassrohr gesperrt und freigegeben werden kann. So ist das wenigstens eine stromab angeordnete Sperrelement besonders einfach ausgebildet. Bevorzugt kann das wenigstens eine stromab angeordnete Sperrventil als Abgasrückführungsklappe oder als Motorbremsklappe ausgebildet sein, die dann in einer Doppelfunktion dazu beitragen, eine Bauteilreduzierung zu gewährleisten.

Gemäß einer ausdrücklich auch unabhängig von der vorstehenden Abgasnachbehandlungsvorrichtung beanspruchten Erfindungsidee wird ferner ein Verfahren zum Aufheizen einer Abgasnachbehandlungsvorrichtung für eine Brennkraftmaschine vorgeschlagen, mit einem Abgasstrang mit wenigstens einem Abgasrohr und wenigstens einem Abgasnachbehandlungselement, wobei eine Abgasrohrinnenwand und/oder das wenigstens eine Abgasnachbehandlungselement zur Ausbildung wenigstens eines abgasstrangseitigen Sorptionselements ein Dampf sorbierendes Material auf, wobei die Abgas- und/oder Luftzufuhr und damit die Dampfzufuhr an das wenigstens eine Sorptionselement bei einem Starten der Brennkraftmaschine, insbesondere bei einem Kaltstart der Brennkraftmaschine, freigegeben wird. Erfindungsgemäß wird bei einem Ausschalten der Brennkraftmaschine die Dampfzufuhr an das wenigstens eine Sorptionselement mittels einer Sperrvorrichtung gesperrt.

Auf diese Weise wird sichergestellt, dass sich das wenigstens eine Sorptionselement nur bei einem Starten der Brennkraftmaschine, insbesondere bei einem Kaltstart der Brennkraftmaschine, erwärmt. Bei einem Ausschalten der Brennkraftmaschine bzw. bei deren Stillstand wird die Dampfzufuhr an das wenigstens eine Sorptionselement gesperrt, da eine andauernde Dampfzufuhr zu einer Dampfsättigung des wenigstens einen Sorptionselements führen würde.

Bevorzugt kann der von dem wenigstens einen Sorptionselement sorbierte Dampf bei einer definierten Sorptionselement-Temperatur aus dem Sorptionselement ausgetrieben werden. Auf diese Weise kann sich das wenigstens eine Sorptionselement bei einem Aufheizen der Abgasnachbehandlungsvorrichtung regenerieren. Dadurch weist das Sorptionselement bei dem nächsten Start der Brennkraftmaschine seine volle Funktionsfähigkeit auf. Bei Metallhydriden liegt diese definierte Sorptionselement-Temperatur in einem Bereich von etwa 280°C bis 500°C, bei Silikagelen in einem Bereich von etwa 40°C bis 100°C und bei Zeolithen in einem Bereich von etwa 130°C bis 300°C. Bevorzugt weist das verwendete Dampf sorbierende Material zudem eine theoretische Wärmekapazität von etwa 250 kWh/K auf.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: Eine Prinzipdarstellung einer erfindungsgemäßen Abgasnachbehandlungsvorrichtung;
- Fig. 2: ein Diagramm, aus dem die Masseverteilung eines Dampf sorbierenden Materials in der Abgasnachbehandlungsvorrichtung gemäß der Fig. 1 hervorgeht;
- Fig. 3: ein Diagramm, aus dem die Masseverteilung eines Dampf sorbierenden Materials von Abgasnachbehandlungselementen der Abgasnachbehandlungsvorrichtung gemäß der Fig. 1 hervorgeht;
- Fig. 4: eine Schnittdarstellung entlang der Schnittebene A-A aus der Fig. 1.

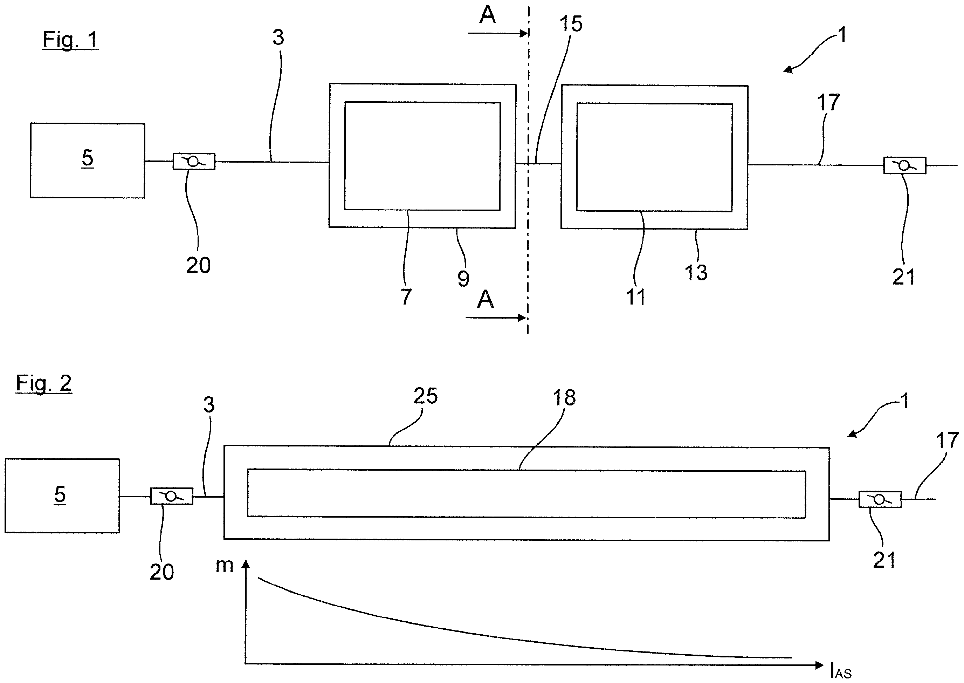

In Fig. 1 ist ein erfindungsgemäßer Abgasstrang 1 in einer ersten Ausführungsform gezeigt. Dieser Abgasstrang 1 weist ein Einlassrohr 3 auf, das mit einem ersten Endbereich an eine Brennkraftmaschine 5 und mit einem zweiten Endbereich an ein einen Partikelfilter 7 aufnehmendes Partikelfilter-Gehäuse bzw. -Canning 9 angeschlossen ist. An das Partikelfilter-Rohr 9 schließt sich in Abgas-Strömungsrichtung S ein mit dem Partikelfilter-Rohr 9 und mit einem einen Katalysator 11 aufnehmenden Katalysator-Gehäuse bzw. -Canning13 gekoppeltes Verbindungsrohr 15 an. Der Abgasstrang 1 umfasst zudem ein Auslassrohr 17, das mit einem ersten Endbereich an das Katalysator-Rohr 13 angeschlossen ist und mit einem zweiten Endbereich in die freie Umgebung mündet.

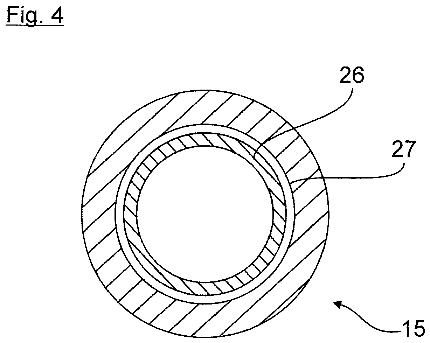

Der Partikelfilter 7, der Katalysator 11 sowie Innenwände des Partikelfilter-Gehäuses 9, des Katalysator-Gehäuse 13 und des Verbindungsrohrs 15 sind mit einem Dampf sorbierenden Material beschichtet. Dies geht beispielhaft aus dem in der Fig. 4 gezeigten Schnitt durch das Verbindungsrohr 15 hervor. Demzufolge ist eine Schicht 26 aus sorbierendem Material mit einer definierten Schichtdicke auf eine Innenwand 27 des Verbindungsrohrs 15 aufgebracht. Das Dampf sorbierende Material kann beispielhaft ein Zeolith Typ A sein, um hier nur eine der möglichen Ausführungen dieses Materials zu nennen. Indem dieses Material Dampf aus dem Abgas der Brennkraftmaschine 5 oder der umgebenden Luft sorbiert, kondensiert dieser Dampf und es wird Wärmeenergie freigesetzt. Auf diese Weise wird der gesamte Abgasstrang 1 in der Kaltstartphase der Brennkraftmaschine 5 schneller erwärmt, wodurch der Partikelfilter 7 und der Katalysator 11 schneller ihre optimale Arbeits-Temperatur erreichen können.

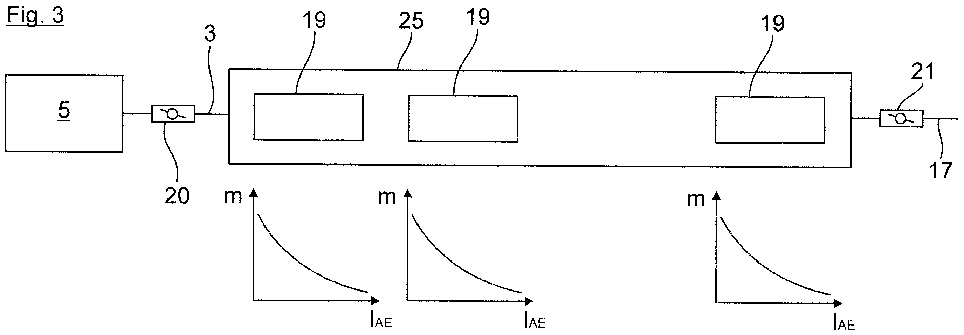

Aus Fig. 2 und 3 geht die Masseverteilung des Dampf sorbierenden Materials in dem Abgasstrang 1 hervor. Um diese zu verdeutlichen, sind in Fig. 2 der Katalysator 11, der Partikelfilter 7 sowie weitere in den Abgasstrang 1 integrierbare Abgasnachbehandlungselemente zu einem Abgasnachbehandlungssystem 18 zusammengefasst. Zudem sind auch die zwischen dem Einlassrohr 5 und dem Auslassrohr 17 angeordneten Rohre zu einem einzigen das Abgasnachbehandlungssystem 18 aufnehmenden Aufnahmerohr 25 zusammengefasst. Gemäß der Fig. 2 nimmt ein Massegehalt m des Dampf sorbierenden Materials in dem Abgasnachbehandlungssystem 18 über dessen Länge I_{AS} in Abgas-Strömungsrichtung S degressiv ab. Diese Masseverteilung ermöglicht eine schnellere Aufheizung des im Bereich der Brennkraftmaschine 5 angeordneten Partikelfilters 7.

Im Vergleich zu Fig. 2 ist in Fig. 3 das Abgasnachbehandlungssystem 18 wieder in einzelne Abgasnachbehandlungselemente 19 aufgeteilt, um die Massenverteilung in den Abgasnachbehandlungselementen 19 zu verdeutlichen. Gemäß der Fig. 3 nimmt ein Massegehalt m des Dampf sorbierenden Materials in den einzelnen Abgasnachbehandlungselementen 19 über dessen Länge I_{AE} in Abgas-Strömungsrichtung S degressiv ab. Mittels dieser Masseverteilung kann mit einer definierten Masse an Dampf sorbierenden Material in jedem Abgasnachbehandlungselement 19 mehr Dampf aus dem Abgasstrom der Brennkraftmaschine 5 sorbiert werden, da sich die Dampfmenge in dem Abgas aufgrund der in Abgas-Strömungsrichtung S abnehmenden Abgastemperatur verringert.

Aus Fig. 1 geht weiter hervor, dass das Einlassrohr 3 ein Einlassventil 20 aufweist. Mittels diesem kann ein Abgasstrom durch das Einlassrohr 3 in Abhängigkeit von definierten Brennkraftmaschinen-Betriebsbedingungen gesperrt oder freigegeben werden. Zudem weist das Auslassrohr 17 ein Auslassventil 21 auf, mittels dem ein Luftstrom von außen in den Abgasstrang 1 ebenfalls in Abhängigkeit von definierten Brennkraftmaschinen-Betriebsbedingungen gesperrt oder freigegeben werden kann.

Im Folgenden werden nun die einzelnen Verfahrensschritte für ein schnelles Aufheizen des erfindungsgemäßen Abgasstrangs 1 erläutert:
Bei einem Kaltstart der Brennkraftmaschine 5 bzw. kurz zuvor werden das Einlassventil 20 und das Auslassventil 21 geöffnet, so dass das Abgas der Brennkraftmaschine 5 durch den Abgasstrang 1 hindurch in die freie Umgebung strömen kann. Der in dem Abgas enthaltene Dampf, beispielsweise Wasserdampf, wird durch das Dampf sorbierende Material aufgenommen und es wird, neben der Wärmeenergie des Abgases, zusätzliche Wärmeenergie freigesetzt. Diese zusätzliche Wärmeenergie ermöglicht ein besonders schnelles Aufheizen des Abgasstrangs 1. Nach Durchlaufen der Kaltstartphase wird das Dampf sorbierende Material mittels des Abgases derart aufgeheizt, dass der darin gespeicherte Dampf wieder ausgetrieben und aus dem Abgasstrang 1 in die freie Umgebung strömen kann. Bei einem Ausschalten der Brennkraftmaschine 5 bzw. kurz danach werden das Einlassventil 20 und das Auslassventil 21 wieder geschlossen, um eine weitere Zuführung von Dampf an das Dampf sorbierende Material zu verhindern. Auf diese Weise wird eine Sättigung des Dampf sorbierenden Materials vor einem erneuten Kaltstart der Brennkraftmaschine 5 zuverlässig vermieden.

### Bezugszeichenliste

- 1: Abgasstrang
- 3: Einlassrohr
- 5: Brennkraftmaschine
- 7: Partikelfilter
- 9: Partikelfilter-Gehäuse
- 11: Katalysator
- 13: Katalysator- Gehäuse
- 15: Verbindungsrohr
- 17: Auslassrohr
- 18: Abgasnachbehandlungssystem
- 19: Abgasnachbehandlungselement
- 20: Einlassventil
- 21: Auslassventil
- 25: Aufnahmerohr
- 26: Schicht aus Dampf sorbierenden Material
- 27: Innenwand Verbindungsrohr
- S: Abgas-Strömungsrichtung

## Patentansprüche

1. Abgasnachbehandlungsvorrichtung für eine Brennkraftmaschine (5), mit einem Abgasstrang (1) mit wenigstens einem Abgasrohr (3, 9, 13, 15, 17) und wenigstens einem Abgasnachbehandlungselement (7, 11), wobei die Abgasrohrinnenwand (27) und/oder das wenigstens eine Abgasnachbehandlungselement (7, 11) zur Ausbildung wenigstens eines abgasstrangseitigen Sorptionselements (7, 9, 11, 13, 15) ein Dampf sorbierendes Material aufweist, wobei eine Sperrvorrichtung (20, 21) vorgesehen ist, mittels der eine Abgas- und/oder Luftzufuhr zu einem das wenigstens eine Sorptionselement (7, 9, 11, 13, 15) aufnehmenden und/oder ausbildenden Sorptionsbereich (25) in Abhängigkeit von definierten Brennkraftmaschinen-Betriebsbedingungen sperrbar und freigebbar ist, **dadurch gekennzeichnet, dass** die Sperrvorrichtung (20, 21) zum Sperren und Freigeben der Luftzufuhr wenigstens ein stromab des Sorptionsbereichs (25) angeordnetes, als Sperrventil ausgebildetes Sperrelement (21) aufweist, mittels dem ein Luftstrom durch ein den Auslass des Abgasstrangs (1) bildendes Auslassrohr (17) sperrbar und freigebbar ist.

2. Abgasnachbehandlungsvorrichtung nach Anspruch 1, **dadurch gekennzeichnet, dass** die Abgasrohrinnenwand (27) und/oder das wenigstens eine Abgasnachbehandlungselement (7, 11) wenigstens bereichsweise mit dem Dampf sorbierenden Material beschichtet ist, und/oder dass das wenigstens eine Abgasnachbehandlungselement (7, 11) wenigstens bereichsweise aus dem Dampf sorbierenden Material hergestellt ist.

3. Abgasnachbehandlungsvorrichtung nach Anspruch 1 oder 2, **dadurch gekennzeichnet, dass** das wenigstens eine Abgasnachbehandlungselement (7, 11) durch wenigstens einen Katalysator und/oder durch wenigstens einen Partikelfilter ausgebildet ist.

4. Abgasnachbehandlungsvorrichtung nach einem der vorhergehenden Ansprüche, **dadurch gekennzeichnet, dass** der Gehalt, insbesondere der Massegehalt, des Dampf sorbierenden Materials des wenigstens einen, insbesondere in einem Einlassbereich des Abgasstrangs (1) angeordneten, Sorptionselements (7, 9, 11, 13, 15) in Abgas-Strömungsrichtung (S) abnimmt, und/oder dass der Gehalt, insbesondere der Massegehalt, des Dampf sorbierenden Materials eines in einem Auslassbereich des Abgasstrangs (1) angeordneten Sorptionselements (7, 9, 11, 13, 15) in Abgas-Strömungsrichtung (S) zunimmt.

5. Abgasnachbehandlungsvorrichtung nach einem der vorhergehenden Ansprüche, **dadurch gekennzeichnet, dass** der Gehalt, insbesondere der Massegehalt, des Dampf sorbierenden Materials in dem Abgasstrang (1) und damit über mehrere in Strömungsrichtung (S) hintereinander liegende Sorptionselemente (7, 9, 11, 13, 15) gesehen, insbesondere in einem Einlassbereich des Abgasstrangs (1), in Abgas-Strömungsrichtung (S) abnimmt, und/oder dass der Gehalt, insbesondere der Massegehalt, des Dampf sorbierenden Materials in einem Auslassbereich des Abgasstrangs (1) in Abgas-Strömungsrichtung (S) zunimmt.

6. Abgasnachbehandlungsvorrichtung nach einem der Ansprüche 1 bis 4, **dadurch gekennzeichnet, dass** der Gehalt, insbesondere der Massegehalt, des Dampf sorbierenden Materials in einem zwischen einem Einlass- und einem Auslassbereich des Abgasstrangs (1) angeordneten Abgasstrang-Zwischenbereich größer ist, als in einem stromauf und/oder stromab davon liegenden Abgasstrang-Bereich.

7. Abgasnachbehandlungsvorrichtung nach einem der vorhergehenden Ansprüche, **dadurch gekennzeichnet, dass** das wenigstens eine Sorptionselement (7, 9, 11, 13, 15) in einer von einem Hauptabgasstrom durchströmten Hauptleitung des Abgasstrangs (1) angeordnet und/oder ausgebildet ist.

8. Abgasnachbehandlungsvorrichtung nach einem der vorhergehenden Ansprüche, **dadurch gekennzeichnet, dass** das Dampf sorbierende Material ein Zeolith und/oder ein Silikagel und/oder ein Alumophosphat und/oder ein Silicoalumophosphat und/oder ein Metallhydrid ist.

9. Abgasnachbehandlungsvorrichtung nach einem der vorhergehenden Ansprüche, **dadurch gekennzeichnet, dass** die Sperrvorrichtung (20, 21) zum Sperren oder Freigeben der Abgaszufuhr wenigstens ein stromauf des Sorptionsbereichs (25) angeordnetes Sperrelement (20) aufweist.

10. Abgasnachbehandlungsvorrichtung nach Anspruch 9, **dadurch gekennzeichnet, dass** das wenigstens eine stromauf angeordnete Sperrelement (20) als Sperrventil ausgebildet ist, mittels dem ein Abgasstrom durch ein den Einlass des Abgasstrangs (1) bildendes Einlassrohr (3) sperrbar oder freigebbar ist.

11. Abgasnachbehandlungsvorrichtung nach einem der vorhergehenden Ansprüche, **dadurch gekennzeichnet, dass** das wenigstens eine stromab angeordnete Sperrventil als Abgasrückführungsklappe oder als Motorbremsklappe ausgebildet ist.

12. Verfahren zum Aufheizen einer Abgasnachbehandlungsvorrichtung für eine Brennkraftmaschine (5), mit einem Abgasstrang (1) mit wenigstens einem Abgasrohr (3, 9, 13, 15, 17) und wenigstens einem Abgasnachbehandlungselement (7, 11), wobei eine Abgasrohrinnenwand (27) und/oder das wenigstens eine Abgasnachbehandlungselement (7, 11) zur Ausbildung wenigstens eines abgasstrangseitigen Sorptionselements (7, 9, 11, 13, 15) ein Dampf sorbierendes Material aufweist, wobei die Abgas- und/oder Luftzufuhr und damit die Dampfzufuhr an das wenigstens eine Sorptionselement (7, 9, 11, 13, 15) bei einem Starten der Brennkraftmaschine (5) freigegeben wird, **dadurch gekennzeichnet, dass** bei einem Ausschalten der Brennkraftmaschine (5) die Dampfzufuhr an das wenigstens eine Sorptionselement (7, 9, 11, 13, 15) mittels einer Sperrvorrichtung (20, 21) gesperrt wird.

13. Verfahren nach Anspruch 12, **dadurch gekennzeichnet, dass** der von dem wenigstens einen Sorptionselement (7, 9, 11, 13, 15) sorbierte Dampf bei einer definierten Sorptionselement-Temperatur aus dem Sorptionselement (7, 9, 11, 13, 15) ausgetrieben wird.

## Claims

1. Exhaust-gas aftertreatment device for an internal combustion engine (5), having an exhaust tract (1) with at least one exhaust pipe (3, 9, 13, 15, 17) and at least one exhaust-gas aftertreatment element (7, 11), wherein the exhaust-pipe internal wall (27) and/or the at least one exhaust-gas aftertreatment element (7, 11) have/has a vapour-sorbing material for the purpose of forming at least one exhaust-tract-side sorption element (7, 9, 11, 13, 15), wherein a blocking device (20, 21) is provided, by means of which a supply of exhaust gas and/or air to a sorption region (25) that accommodates and/or forms the at least one sorption element (7, 9, 11, 13, 15) can be blocked and enabled as a function of defined internal combustion engine operating conditions, **characterized in that** the blocking device (20, 21) has at least one blocking element (21) in the form of a shut-off valve and arranged downstream of the sorption region (25) for the purpose of blocking and enabling the supply of air, by means of which an air stream through an outlet pipe (17) that forms the outlet of the exhaust tract (1) can be blocked and enabled.

2. Exhaust-gas aftertreatment device according to Claim 1, **characterized in that** the exhaust-pipe internal wall (27) and/or the at least one exhaust-gas aftertreatment element (7, 11) are/is coated, at least in regions, with the vapour-sorbing material, and/or **in that** the at least one exhaust-gas aftertreatment element (7, 11) is produced at least in regions from the vapour-sorbing material.

3. Exhaust-gas aftertreatment device according to Claim 1 or 2, **characterized in that** the at least one exhaust-gas aftertreatment element (7, 11) is formed by at least one catalytic converter and/or by at least one particle filter.

4. Exhaust-gas aftertreatment device according to one of the preceding claims, **characterized in that** the content, in particular the mass content, of the vapour-sorbing material of the at least one sorption element (7, 9, 11, 13, 15) arranged in particular in an inlet region of the exhaust tract (1) decreases in the exhaust-gas flow direction (S), and/or **in that** the content, in particular the mass content, of the vapour-sorbing material of a sorption element (7, 9, 11, 13, 15) arranged in an outlet region of the exhaust tract (1) increases in the exhaust-gas flow direction (S).

5. Exhaust-gas aftertreatment device according to one of the preceding claims, **characterized in that** the content, in particular the mass content, of the vapour-sorbing material in the exhaust tract (1), and thus considered across multiple sorption elements (7, 9, 11, 13, 15) positioned in series in the flow direction (S), in particular in an inlet region of the exhaust tract (1), decreases in the exhaust-gas flow direction (S), and/or **in that** the content, in particular the mass content, of the vapour-sorbing material in an outlet region of the exhaust tract (1) increases in the exhaust-gas flow direction (S).

6. Exhaust-gas aftertreatment device according to one of Claims 1 to 4, **characterized in that** the content, in particular the mass content, of the vapour-sorbing material is greater in an exhaust tract intermediate region arranged between an inlet and an outlet region of the exhaust tract (1) than in an exhaust tract region situated upstream and/or downstream thereof.

7. Exhaust-gas aftertreatment device according to one of the preceding claims, **characterized in that** the at least one sorption element (7, 9, 11, 13, 15) is arranged and/or formed in a main line, through which a main exhaust-gas stream passes, of the exhaust tract (1).

8. Exhaust-gas aftertreatment device according to one of the preceding claims, **characterized in that** the vapour-sorbing material is a zeolite and/or a silica gel and/or an aluminophosphate and/or a silicoaluminophosphate and/or a metal hydride.

9. Exhaust-gas aftertreatment device according to one of the preceding claims, **characterized in that** the blocking device (20, 21) has at least one blocking element (20) arranged upstream of the sorption region (25) for the purpose of blocking or enabling the supply of exhaust gas.

10. Exhaust-gas aftertreatment device according to Claim 9, **characterized in that** the at least one blocking element (20) arranged upstream is in the form of a shut-off valve by means of which an exhaust-gas stream through an inlet pipe (3) that forms the inlet of the exhaust tract (1) can be blocked or enabled.

11. Exhaust-gas aftertreatment device according to one of the preceding claims, **characterized in that** the at least one shut-off valve arranged downstream is in the form of an exhaust-gas recirculation flap or an engine braking flap.

12. Method for heating an exhaust-gas aftertreatment device for an internal combustion engine (5), having an exhaust tract (1) with at least one exhaust pipe (3, 9, 13, 15, 17) and at least one exhaust-gas aftertreatment element (7, 11), wherein an exhaust-pipe internal wall (27) and/or the at least one exhaust-gas aftertreatment element (7, 11) have/has a vapour-sorbing material for the purpose of forming at least one exhaust-tract-side sorption element (7, 9, 11, 13, 15), wherein the supply of exhaust gas and/or air and thus the supply of vapour to the at least one sorption element (7, 9, 11, 13, 15) is enabled upon a start of the internal combustion engine (5), **characterized in that**, upon a deactivation of the internal combustion engine (5), the supply of vapour to the at least one sorption element (7, 9, 11, 13, 15) is blocked by means of a blocking device (20, 21).

13. Method according to Claim 12, **characterized in that** the vapour that is sorbed by the at least one sorption element (7, 9, 11, 13, 15) is expelled from the sorption element (7, 9, 11, 13, 15) above a defined sorption element temperature.

## Revendications

1. Dispositif de post-traitement de gaz d'échappement pour un moteur à combustion interne (5), comprenant une ligne d'échappement (1) comprenant au moins un tuyau d'échappement (3, 9, 13, 15, 17) et au moins un élément de post-traitement de gaz d'échappement (7, 11), la paroi interne du tuyau d'échappement (27) et/ou l'au moins un élément de post-traitement des gaz d'échappement (7, 11) présentant un matériau sorbant la vapeur afin de réaliser au moins un élément de sorption du côté de la ligne d'échappement (7, 9, 11, 13, 15), un dispositif de blocage (20, 21) étant prévu, au moyen duquel une alimentation en gaz d'échappement et/ou en air à une région de sorption (25) recevant et/ou constituant l'au moins un élément de sorption (7, 9, 11, 13, 15) pouvant être bloquée et ouverte en fonction de conditions de fonctionnement définies du moteur à combustion interne, **caractérisé en ce que** le dispositif de blocage (20, 21) pour bloquer et libérer l'alimentation en air présente au moins un élément de blocage (21) disposé en aval de la région de sorption (25), réalisé sous forme de soupape d'arrêt, au moyen duquel un flux d'air à travers un tuyau d'évacuation (17) formant la sortie de la ligne d'échappement (1) peut être bloqué et libéré.

2. Dispositif de post-traitement de gaz d'échappement selon la revendication 1, **caractérisé en ce que** la paroi interne du tuyau d'échappement (27) et/ou l'au moins un élément de post-traitement de gaz d'échappement (7, 11) est revêtu(e) au moins en partie avec le matériau sorbant la vapeur, et/ou **en ce que** l'au moins un élément de post-traitement de gaz d'échappement (7, 11) est fabriqué au moins en partie à partir du matériau sorbant la vapeur.

3. Dispositif de post-traitement de gaz d'échappement selon la revendication 1 ou 2, **caractérisé en ce que** l'au moins un élément de post-traitement de gaz d'échappement (7, 11) est réalisé par au moins un catalyseur et/ou par au moins un filtre à particules.

4. Dispositif de post-traitement de gaz d'échappement selon l'une quelconque des revendications précédentes, **caractérisé en ce que** la teneur, en particulier la teneur massique, du matériau sorbant la vapeur de l'au moins un élément de sorption (7, 9, 11, 13, 15) notamment disposé dans une région d'entrée de la ligne d'échappement (1) diminue dans la direction d'écoulement du gaz d'échappement (S) et/ou **en ce que** la teneur, en particulier la teneur massique, du matériau sorbant la vapeur d'un élément de sorption (7, 9, 11, 13, 15) disposé dans une région de sortie de la ligne d'échappement (1) augmente dans la direction d'écoulement du gaz d'échappement (S).

5. Dispositif de post-traitement de gaz d'échappement selon l'une quelconque des revendications précédentes, **caractérisé en ce que** la teneur, en particulier la teneur massique, du matériau sorbant la vapeur dans la ligne d'échappement (1) et par conséquent, vu sur plusieurs éléments de sorption (7, 9, 11, 13, 15) situés les uns derrière les autres dans la direction d'écoulement (S), en particulier dans une région d'entrée de la ligne d'échappement (1), diminue dans la direction d'écoulement du gaz d'échappement (S), et/ou **en ce que** la teneur, en particulier la teneur massique, du matériau sorbant la vapeur dans une région de sortie de la ligne d'échappement (1) augmente dans la direction d'écoulement du gaz d'échappement (S).

6. Dispositif de post-traitement de gaz d'échappement selon l'une quelconque des revendications 1 à 4, **caractérisé en ce que** la teneur, en particulier la teneur massique, du matériau sorbant la vapeur dans une région intermédiaire de la ligne d'échappement disposée entre une région d'entrée et une région de sortie de la ligne d'échappement (1) est supérieure à celle dans une région de la ligne d'échappement située en avant et/ou en aval de celle-ci.

7. Dispositif de post-traitement de gaz d'échappement selon l'une quelconque des revendications précédentes, **caractérisé en ce que** l'au moins un élément de sorption (7, 9, 11, 13, 15) est disposé et/ou est réalisé dans une conduite principale de la ligne d'échappement (1) parcourue par un flux de gaz d'échappement principal.

8. Dispositif de post-traitement de gaz d'échappement selon l'une quelconque des revendications précédentes, **caractérisé en ce que** le matériau sorbant la vapeur est une zéolithe et/ou un gel de silice et/ou un aluminophosphate et/ou un silico-aluminophosphate et/ou un hydrure métallique.

9. Dispositif de post-traitement de gaz d'échappement selon l'une quelconque des revendications précédentes, **caractérisé en ce que** le dispositif de blocage (20, 21) pour bloquer ou libérer l'alimentation en gaz d'échappement présente au moins un élément de blocage (20) disposé en amont de la région de sorption (25).

10. Dispositif de post-traitement de gaz d'échappement selon la revendication 9, **caractérisé en ce que** l'au moins un élément de blocage (20) disposé en amont est réalisé sous forme de soupape d'arrêt au moyen de laquelle un flux de gaz d'échappement à travers un tube d'entrée (3) formant l'entrée de la ligne d'échappement (1) peut être bloqué ou libéré.

11. Dispositif de post-traitement de gaz d'échappement selon l'une quelconque des revendications précédentes, **caractérisé en ce que** l'au moins une soupape d'arrêt disposée en aval est réalisée sous forme de clapet de recirculation de gaz d'échappement ou sous forme de clapet de frein moteur.

12. Procédé de chauffage d'un dispositif de post-traitement de gaz d'échappement pour un moteur à combustion interne (5), comprenant une ligne d'échappement (1) comprenant au moins un tuyau d'échappement (3, 9, 13, 15, 17) et au moins un élément de post-traitement de gaz d'échappement (7, 11), une paroi interne du tuyau d'échappement (27) et/ou l'au moins un élément de post-traitement des gaz d'échappement (7, 11) présentant un matériau sorbant la vapeur afin de réaliser au moins un élément de sorption du côté de la ligne d'échappement (7, 9, 11, 13, 15), l'alimentation en gaz d'échappement et/ou en air et par conséquent l'alimentation en vapeur à l'au moins un élément de sorption (7, 9, 11, 13, 15) étant libérée lors d'un démarrage du moteur à combustion interne (5), **caractérisé en ce que** dans le cas d'une coupure du moteur à combustion interne (5), l'alimentation en vapeur à l'au moins un élément de sorption (7, 9, 11, 13, 15) est bloquée au moyen d'un dispositif de blocage (20, 21).

13. Procédé selon la revendication 12, **caractérisé en ce que** la vapeur sorbée par l'au moins un élément de sorption (7, 9, 11, 13, 15) est évacuée à une température définie de l'élément de sorption hors de l'élément de sorption (7, 9, 11, 13, 15).
